# FASCICULE DE BREVET EUROPEEN

(11) **EP 3 767 134 B1**
(45) Date de publication et mention de la délivrance du brevet: **14.12.2022**
(21) Numéro de dépôt: 20184489.1
(22) Date de dépôt: 07.07.2020
(51) Int. Cl.: F16H 57/04, F02K 3/04, F16H 57/08

(54) **COLLECTEUR D'HUILE POUR UN REDUCTEUR MECANIQUE DE TURBOMACHINE D'AERONEF**
ÖLAUFFANGBEHÄLTER FÜR MECHANISCHES REDUKTIONSGETRIEBE EINES LUFTFAHRZEUG-TURBOTRIEBWERKS
OIL COLLECTOR FOR A MECHANICAL GEAR OF AN AIRCRAFT TURBINE ENGINE

(30) Priorité: 16.07.2019 FR 1908011
(43) Date de publication de la demande: 20.01.2021
(73) Titulaire: Safran Transmission Systems, 92700 Colombes (FR)
(72) Inventeur: CHARRIER, Mathieu, Jean, 77550 MOISSY-CRAMAYEL (FR); MORELLI, Boris, Pierre, Marcel, 77550 MOISSY-CRAMAYEL (FR); SEREY, Jean-Pierre, 77550 MOISSY-CRAMAYEL (FR)
(74) Mandataire: Gevers & Orès

(56) Documents cités:
- EP-A1- 2 559 913
- EP-A1- 2 719 927

## Description

### Domaine technique de l'invention

La présente invention concerne un collecteur d'huile pour un réducteur mécanique de turbomachine, en particulier d'aéronef.

### Aval-plan technique

L'état de l'art comprend notamment les documents WO-A1-2010/092263, FR-A1 -2 987 416, FR-A1 -3 041 054, EP-A1 -2 719 927 sur lequel est basée la forme en deux parties de la revendication 1 et EP-A1-2 559 913.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le sens que le solaire.
- sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

Les engrènements des réducteurs sont lubrifiés par de l'huile. L'huile de lubrification est chauffée en fonctionnement car elle absorbe de l'énergie calorifique générée par le réducteur. La température de l'huile a un impact sur sa viscosité et sur son efficacité de lubrification. Il est donc important d'évacuer l'huile chaude après la lubrification du réducteur, afin de la recycler.

Cependant, une fois lubrifiés, les satellites du réducteur projettent de l'huile chaude par centrifugation aux satellites voisins. Cette recirculation d'huile a plusieurs inconvénients : augmentation des pertes par ventilation du réducteur, augmentation de la température des satellites, réduction de la marge au grippage, augmentation de la température de sortie d'huile pour le dimensionnement des échangeurs, taux d'air dans l'huile plus important, consommation d'huile plus importante ce qui diminue le niveau bas d'huile dans le réservoirs d'huile, etc.

Une solution à ce problème consiste à disposer des déflecteurs ou des collecteurs d'huile entre les satellites. Les déflecteurs ont pour but de dévier l'huile projetée vers des moyens d'évacuation et de recyclage de l'huile. Les collecteurs d'huile ont pour but de collecter l'huile projetée et de l'acheminer vers les moyens d'évacuation et de recyclage de l'huile.

Un collecteur d'huile de réducteur comprend en général un corps comportant deux faces latérales opposées configurées pour s'étendre en partie autour de satellites du réducteur, le collecteur comportant en outre une cavité interne de circulation d'huile reliée d'une part à des entrées d'huile situées sur les faces latérales, et d'autre part à au moins une sortie d'huile.

Ce collecteur doit évacuer efficacement l'huile sous peine de venir saturer d'huile l'espace entre les satellites et le collecteur. Ce phénomène a pour conséquence le barbotage des satellites et entraine les mêmes conséquences néfastes listées précédemment.

La présente invention propose d'optimiser la récupération de l'huile par un collecteur grâce à un perfectionnement qui est simple, efficace et économique.

### Résumé de l'invention

L'invention concerne un collecteur d'huile pour un réducteur mécanique de turbomachine, en particulier d'aéronef, selon la revendication 1, des modes de réalisation préférentiels sont définis par les revendications dépendantes. L'huile de lubrification des satellites est projetée par centrifugation sur les faces latérales du collecteur comportant les entrées d'huile. Ces entrées ou évidements à section de passage croissante permettent de limiter les pertes de charge, les trainées et les perturbations de l'écoulement de l'huile vers la cavité du collecteur. Une quantité relativement importante d'huile peut être acheminée simultanément vers la cavité du fait de la disposition de ces entrées en colonne et rangées sur les faces du collecteur. Les entrées d'huile sont ainsi organisées en matrice ou réseau captant un maximum d'huile projetée par les satellites.

Selon l'invention, au moins certaines desdites parois ont un profil hydrodynamique ; une paroi à profil hydrodynamique est une paroi qui est conçue pour réduire au minimum les perturbations dans l'écoulement d'un fluide sur cette paroi ; un exemple de paroi à profil hydrodynamique est une paroi à profil NACA ; dans la présente demande, on entend par profil NACA, une surface hydrodynamique configurée pour assurer un écoulement d'huile en limitant les pertes de charge et traînées ; selon l'invention, ce profil ou cette surface est dépourvu d'arête et comprend des portions arrondies assurant un écoulement d'huile sans perturbation ; le profil peut par exemple comprendre une rampe de faible pente, de préférence inférieure à 20%.

La présente invention concerne également un réducteur mécanique de turbomachine, en particulier d'aéronef, comportant un solaire, une couronne s'étendant autour du solaire, et des satellites engrenés avec le solaire et la couronne, des collecteurs tels que décrits ci-dessus étant disposés entre les satellites.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue schématique partielle en coupe axiale d'un réducteur mécanique,
[Fig. 3] la figure 3 est une vue schématique en coupe transversale d'un réducteur mécanique,
[Fig. 4] la figure 4 est une vue schématique en perspective d'un collecteur selon un mode de réalisation de l'invention,
[Fig. 5] la figure 5 est une vue schématique en perspective et à plus grande échelle d'une entrée d'huile du collecteur de la figure 4,
[Fig. 6] la figure 6 est une vue schématique en coupe du collecteur de la figure 4,
[Fig. 7] la figure 7 est une vue schématique en coupe d'une entrée d'huile du collecteur,
[Fig. 8] la figure 8 est une vue similaire à celle de la figure 7 et montrant des exemples dimensionnels, et
[Fig. 9] la figure 9 est une vue similaire à celle de la figure 5 et montrant d'autres exemples dimensionnels.

### Description détaillée de l'invention

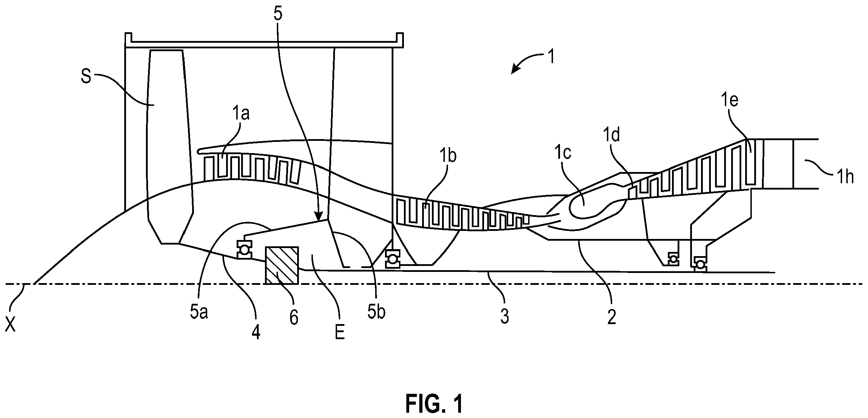

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

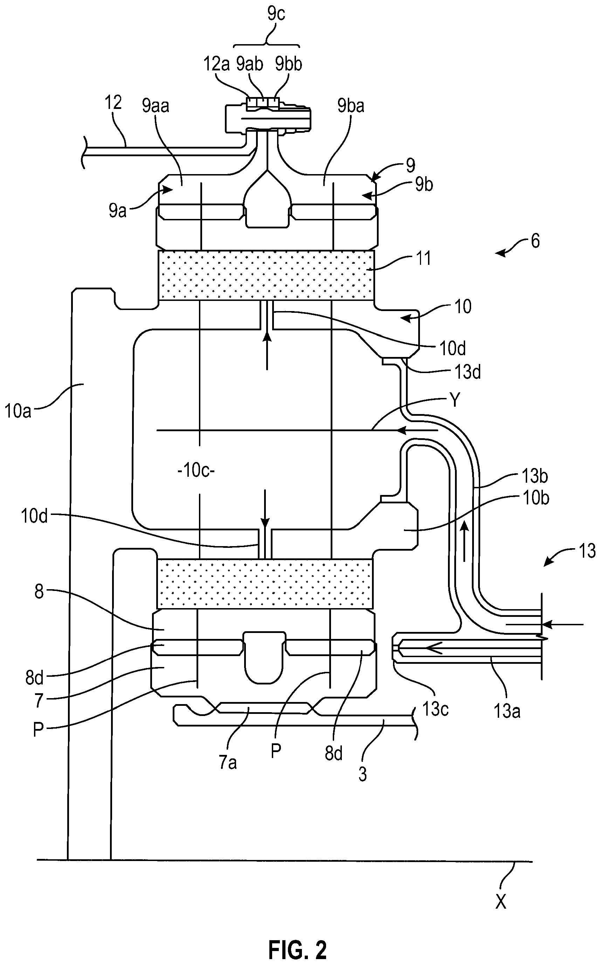

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie nous avons :
■ dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
■ dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrostatique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture 8d d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
■ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
■ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval. Dans les autres figures, dans le cas d'un roulement à deux rangées de rouleaux, chaque rangée d'éléments roulants est aussi centrée sur deux plans médians.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

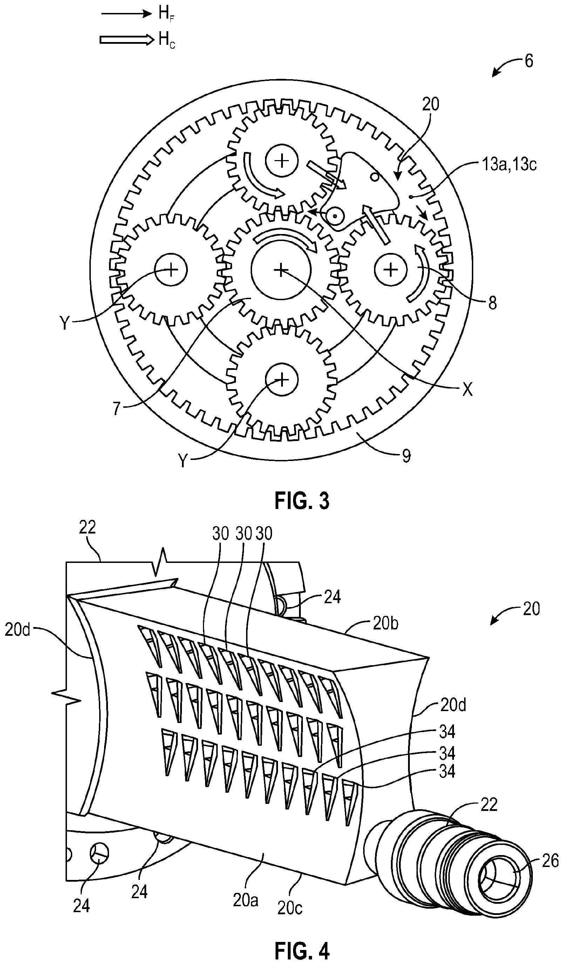

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers des injecteurs 13a pour ressortir par des extrémités 13c afin de lubrifier par de l'huile dite froide (H_{F}) les dentures des satellites 8, du solaire 7 et aussi de la couronne 9 (figure 3). L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

Du fait des forces centrifuges, de l'huile dite chaude Hc de lubrification des dentures est projetée radialement vers l'extérieur par rapport aux axes Y des satellites, comme cela est représenté à la figure 3. Pour éviter que cette huile perturbe la lubrification des satellites 8 adjacents, des collecteurs d'huile 20 sont disposés entre les satellites 8. Bien que la figure 3 représente un seul collecteur 20, le réducteur comprend un collecteur entre deux satellites adjacents et comprend donc autant de collecteurs que de satellites, à savoir quatre dans l'exemple représenté.

La figure 4 montre un exemple de réalisation d'un collecteur d'huile 20 selon l'invention.

Le collecteur 20 comprend un corps, ici monobloc, qui comporte deux faces latérales 20a opposées destinées à s'étendre en partie autour de deux satellites 8 adjacents. Ces faces latérales ont selon l'invention une forme incurvée concave dont le rayon de courbure peut être centré sur l'axe Y de rotation du satellite 8 auquel cette face 20a fait face.

Le collecteur 20 comprend en outre une face supérieure 20b ou radialement externe, ici plane, destinée à s'étendre en regard de la couronne 9 ou d'une paroi d'une cage dans le cas où le solaire 7 et les satellites 8 du réducteur 6 sont disposés dans une cage.

Le collecteur 20 comprend en outre une face inférieure 20c ou radialement interne, ici plane, destinée à s'étendre en regard du solaire 7.

Enfin, le collecteur 20 comprend deux faces 20d, respectivement amont et aval. Comme dans l'exemple représenté, l'une de ces faces 20d peut comprendre un organe 22 de fixation au réducteur. Dans le cas précité d'un réducteur à cage, l'organe 22 peut être formé par un couvercle de forme circulaire qui recouvrirait une ouverture de la cage pour le passage et le montage du collecteur dans la cage. Cet organe 22 ou ce couvercle peut comprendre à sa périphérie des orifices 24 de passage de vis de fixation à la cage.

La face 20d opposée du collecteur 20 peut comprendre une sortie commune d'huile 26 qui se présente par exemple sous la forme d'un embout tubulaire de raccordement fluidique. Cet embout peut être configuré pour traverser une lumière de la cage du réducteur par exemple.

Le collecteur 20 comprend en outre une cavité interne 28 de circulation d'huile reliée à la sortie d'huile 26 ainsi qu'à des entrées d'huile 30 situées sur les faces 20a.

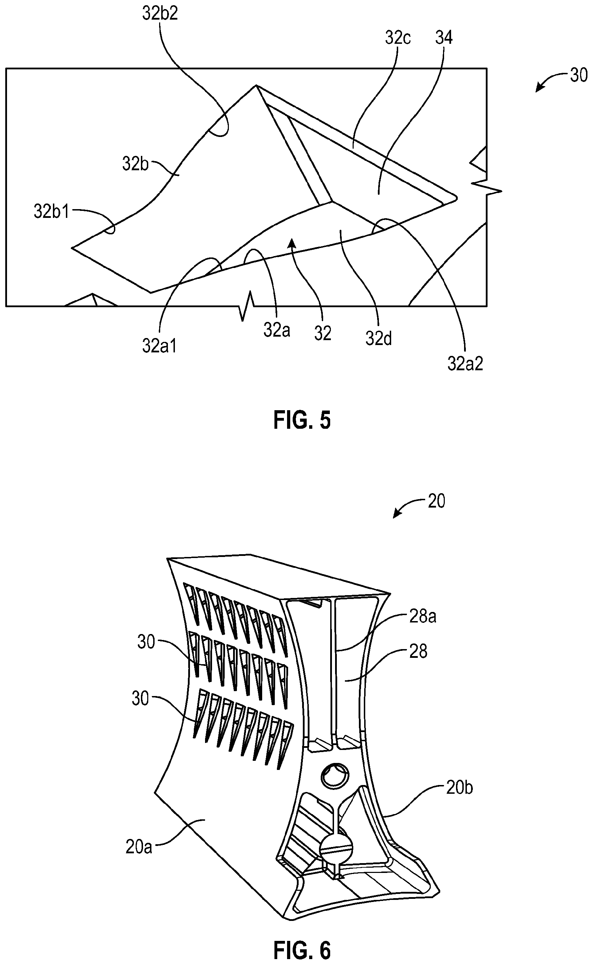

La figure 6 montre un exemple de réalisation non limitatif d'une cavité interne 28 d'un collecteur. Cette cavité 28 peut comprendre un ou plusieurs espaces reliés les uns aux autres.

Selon l'invention, les entrées 30 ont chacune une section croissante et de préférence au moins une paroi à profil hydrodynamique et en particulier NACA, ces entrées étant disposés en colonnes et en rangées.

Dans l'exemple représenté, le collecteur 20 comprend sur chacune de ces faces 20a trois rangées de dix entrées 30 ou dix colonnes de trois entrées. Il y a donc trente entrées 30 sur chacune des faces du collecteur 20 dans cet exemple.

Naturellement, le nombre de rangées et de colonnes peut varier selon les dimensions des entrées 30 et des faces 20a par exemple. Le nombre de rangées est de préférence supérieur ou égal à trois. Le nombre de colonnes est avantageusement supérieur ou égal à cinq, et de préférence supérieur ou égal à huit.

Les entrées 30 d'une rangée peuvent être disposées en quinconce par rapport aux entrées d'au moins une des rangées adjacentes.

Dans l'exemple représenté, les entrées d'une rangée sont décalées selon la direction d'agencement des colonnes par rapport aux entrées d'au moins une des rangées adjacentes. Plus exactement, les entrées des rangées paires sont, selon la direction d'agencement des colonnes, alignées entre elles, et les entrées des rangées impaires sont, selon la direction d'agencement des colonnes, alignées entre elles.

Ainsi, l'huile qui s'écoule sur la face 20a, entre deux entrées adjacentes, peut être captée et s'écouler à travers l'entrée disposée sur l'autre rangée, entre ces deux entrées adjacentes.

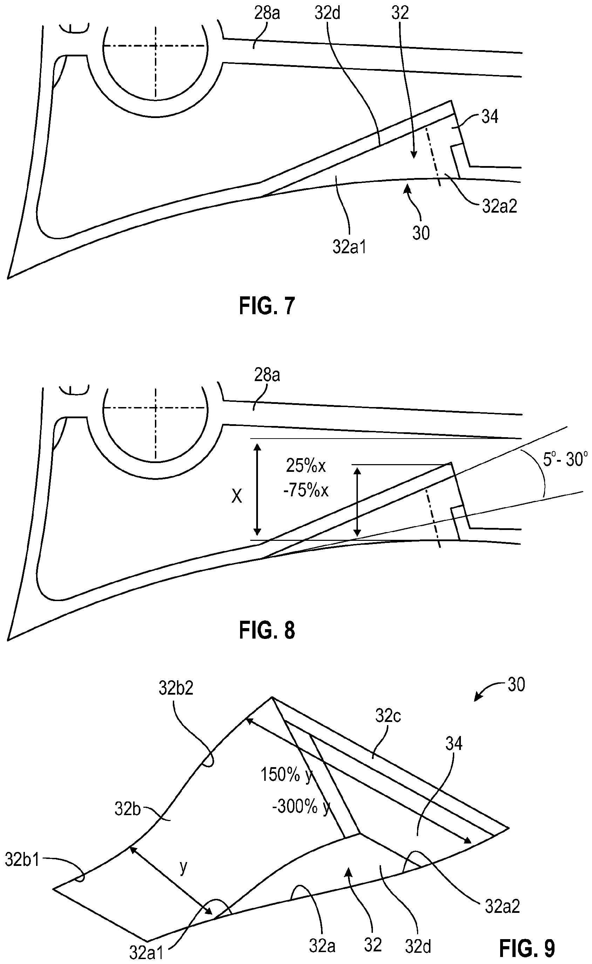

Les figures 5 et 7 montrent une entrée 30 à plus grande échelle.

Chacune des entrées 30 comprend un évidement 32 formé dans la face 20a. Cet évidement 32 est délimité par des parois 32a, 32b, 32c, 32d dont une 32c comporte une fenêtre 34 de passage d'huile à l'intérieur de la cavité 28. La fenêtre 34 a par exemple une forme générale rectangulaire ou trapézoïdale.

L'évidement 32 comporte deux parois latérales 32a, 32b en regard et une paroi inclinée 32d formant une rampe qui s'étend entre les parois latérales 32a, 32b et qui est configurée pour acheminer l'huile depuis la face 20a jusqu'à la paroi 32c qui est une paroi de fond et comprend la fenêtre 34.

La paroi 32d a de préférence une faible pente (de préférence comprise entre 5 et 30° - cf. figure 8) pour limiter les perturbations dans l'huile pénétrant dans l'évidement 32. La figure 8 donne un exemple de dimensions de l'évidement 32. La hauteur de l'évidement 332, au niveau de la fenêtre 34, est comprise entre 25%.x et 75%.x lorsque x est la hauteur mesurée dans la même direction entre la face 20a du collecteur sur laquelle est situé l'évidement, et une cloison interne 28a du collecteur. Cette cloison 28a est visible à la figure 6 notamment et s'étend dans un plan médian du collecteur passant entre les faces 20a, 20b.

Comme on le voit en Fig. 5, les parois latérales 32a, 32b divergent l'une de l'autre vers la fenêtre 34 de façon à ce que l'évidement 32 ait une forme générale évasée vers cette fenêtre. La figure 9 donne un exemple de dimensions transversales entre les parois 32a, 32b de l'évidement 32. La dimension transversale entre les portions 32a2, 32b2 est comprise entre 150%.y et 300%.y lorsque y est la dimension transversale entre les portions 32a1, 32b1.

Selon l'invention, ce sont les parois latérales 32a, 32b qui ont un profil NACA. Elles ont chacune une forme évolutive non plane et dépourvue d'arête. Chaque paroi 32a, 32b comprend selon l'invention une première portion incurvée convexe 32a1, 32b1 suivie d'une seconde portion incurvée concave 32a2, 32b2.

Comme cela est visible à la figure 4, les entrées 30 peuvent occuper une surface représentant plus de 50% de la surface totale de la face 20a correspondante. On constate par ailleurs que les parois 32c comportant les fenêtres sont situées du côté de la face supérieure 20b du collecteur.

En fonctionnement, l'huile projetée sur chaque face 20a s'écoule sur cette face, radialement vers l'extérieur, c'est-à-dire de la face 20c vers la face 20d, du fait des forces centrifuges et de la forme incurvée concave de cette face. L'huile peut alors s'écouler dans la cavité 28 du collecteur 20 à travers les entrées 30 situées sur les faces 20a. L'huile commence par s'écouler sur la paroi inclinée 32d et sur et le long des portions 32a1, 32b1 des parois 32a, 32b, puis elle s'écoule ensuite toujours sur la paroi inclinée et sur et le long des portions 32a2, 32b2 des parois 32a, 32b, pour enfin atteindre et traverser les fenêtres 34.

De préférence, chacune des faces latérales 20a opposées comprend des colonnes et rangées de plusieurs entrées 30 présentant chacune un évidement 32 ayant une section progressivement croissante.

L'invention apporte plusieurs avantages et notamment : diminution des pertes par ventilation du réducteur, diminution de la température des satellites, diminution de la température de sortie d'huile pour le dimensionnement des échangeurs, diminution du taux d'air dans l'huile, etc.

## Revendications

1. Collecteur d'huile (20) pour un réducteur mécanique (6) de turbomachine (1), en particulier d'aéronef, ce collecteur (20) comportant un corps comportant deux faces latérales (20a) opposées chacune configurée pour s'étendre en partie autour d'un satellites (8) du réducteur, le collecteur comportant en outre une cavité interne (28) de circulation d'huile reliée d'une part à des entrées d'huile (30) situées sur lesdites faces latérales (20a) et d'autre part à au moins une sortie d'huile (26), au moins une desdites faces latérales (20a) comprenant colonnes et rangées de plusieurs entrées (30) présentant chacune un évidement (32) ayant une section progressivement croissante, **caractérisé en ce que** chaque évidement (32) est délimité par des parois (32a, 32b, 32c, 32d), et dans lequel au moins certaines desdites parois (32a, 32b) ont un profil hydrodynamique de type NACA, une des parois (32c) comportant une fenêtre (34) de passage d'huile à l'intérieur de la cavité interne (28), les parois (32a, 32b, 32c, 32d) de l'évidement (32) comportent deux parois latérales (32a, 32b) en regard et une paroi inclinée (32d) formant une rampe s'étendant entre les parois latérales et configurée pour acheminer l'huile depuis la face latérale (20a) jusqu'à une paroi de fond (32c) comportant ladite fenêtre (34), les parois latérales (32a, 32b) présentant une forme évolutive non plane et dépourvue d'arête comprenant une première portion incurvée convexe (32a1, 32b1) suivie d'une seconde portion incurvée concave (32a2, 32b2), les paroi latérales (32a, 32b) présentant le profil hydrodynamique de type NACA.

2. Collecteur (20) selon la revendication 1, dans lequel le nombre de rangées est supérieur ou égal à trois.

3. Collecteur (20) selon la revendication 1 ou 2, dans lequel le nombre de colonnes est supérieur ou égal à cinq, et de préférence supérieur ou égal à huit.

4. Collecteur (20) selon l'une des revendications précédentes, dans lequel les entrées (30) d'une rangée sont décalées selon la direction d'agencement des colonnes par rapport aux entrées d'au moins une des rangées adjacentes.

5. Collecteur (20) selon la revendication précédente, dans lequel les entrées (30) définissent des rangées paires et impaires, les entrées des rangées paires sont, selon la direction d'agencement des colonnes, alignées entre elles, et les entrées (30) des rangées impaires sont, selon la direction d'agencement des colonnes, alignées entre elles.

6. Collecteur (20) selon l'une des revendications précédentes, dans lequel les parois latérales (32a, 32b) divergent l'une de l'autre vers ladite fenêtre (34) de façon à ce que l'évidement (32) ait une forme générale évasée vers cette fenêtre.

7. Collecteur (20) selon l'une des revendications précédentes, dans lequel les entrées (30) situées sur chacune des faces latérales (20a) occupent une surface représentant plus de 50% de la surface totale de cette face latérale (20a).

8. Collecteur (20) selon l'une quelconque des revendications précédentes, dans lequel chacune des deux faces latérales (20a) opposées comprend les colonnes et rangées de plusieurs entrées (30) présentant chacune un évidement (32) ayant une section progressivement croissante, chaque évidement (32) étant délimité par des parois (32a, 32b, 32c, 32d), au moins certaines desdites parois (32a, 32b) sont des parois latérales (32a, 32b) qui présentant une forme évolutive non plane et dépourvue d'arête comprenant une première portion incurvée convexe (32a1, 32b1 ) suivie d'une seconde portion incurvée concave (32a2, 32b2), les paroi latérales (32a, 32b) présentant un profil hydrodynamique de type NACA.

9. Réducteur mécanique (6) de turbomachine, en particulier d'aéronef, comportant un solaire (7), une couronne (9) s'étendant autour du solaire, des satellites (8) engrenés avec le solaire et la couronne, et des collecteurs (20) selon l'une des revendications précédentes disposés entre les satellites.

10. Turbomachine (1), en particulier d'aéronef, comportant un réducteur mécanique (6) selon la revendication précédente.

## Patentansprüche

1. Ölauffangbehälter (20) für ein mechanisches Reduktionsgetriebe (6) einer Turbomaschine (1), insbesondere eines Luftfahrzeugs, wobei dieser Auffangbehälter (20) einen Körper umfasst, der zwei gegenüberliegende Seitenflächen (20a) umfasst, die jeweils konfigurieren, um sich teilweise um einen Satelliten (8) des Reduktionsgetriebes zu erstrecken, wobei der Auffangbehälter weiter einen inneren Hohlraum (28) zum Zirkulieren von Öl umfasst, der einerseits mit Öleinlässen (30), die sich auf den Seitenflächen (20a) befinden, und andererseits mit mindestens einem Ölauslass (26) verbunden ist, wobei mindestens eine der Seitenflächen (20a) Spalten und Reihen mit mehreren Einlässen (30) umfasst, die jeweils eine Aussparung (32) mit einem progressiv zunehmenden Querschnitt aufweisen, **dadurch gekennzeichnet, dass** jede Aussparung (32) durch Wände (32a, 32b, 32c, 32d) begrenzt wird, und dadurch, dass mindestens gewisse der Wände (32a, 32b) ein hydrodynamisches Profil vom NACA-Typ aufweisen, wobei eine der Wände (32c) ein Öldurchgangsfenster (34) im Inneren des inneren Hohlraums (28) umfasst, wobei die Wände (32a, 32b, 32c, 32d) der Aussparung (32) zwei einander zugewandte Seitenwände (32a, 32b) und eine geneigte Wand (32d) umfassen, die eine Rampe bildet, die sich zwischen den Seitenwänden erstreckt und konfiguriert ist, um das Öl ausgehend von der Seitenfläche (20a) bis zu einer Bodenwand (32c), die das Fenster (34) umfasst, zuzuführen, wobei die Seitenwände (32a, 32b) eine nichtebene erweiterbare Form ohne Kanten aufweisen, umfassend einen konvexen gekrümmten ersten Abschnitt (32a1, 32b1), gefolgt von einem konkaven gekrümmten zweiten Abschnitt (32a2, 32b2), wobei die Seitenwände (32a, 32b) das hydrodynamische Profil vom NACA-Typ aufweisen.

2. Auffangbehälter (20) nach Anspruch 1, wobei die Anzahl von Reihen größer oder gleich drei ist.

3. Auffangbehälter (20) nach Anspruch 1 oder 2, wobei die Anzahl von Spalten größer oder gleich fünf und vorzugsweise größer oder gleich acht ist.

4. Auffangbehälter (20) nach einem der vorstehenden Ansprüche, wobei die Einlässe (30) einer Reihe in Bezug auf die Einlässe mindestens einer der angrenzenden Reihen in der Anordnungsrichtung der Spalten versetzt sind.

5. Auffangbehälter (20) nach dem vorstehenden Anspruch, wobei die Einlässe (30) geradzahlige und ungeradzahlige Reihen definieren, wobei die Einlässe der geradzahligen Reihen in der Anordnungsrichtung der Spalten untereinander ausgerichtet sind und die Einlässe (30) der ungeradzahligen Reihen in der Anordnungsrichtung der Spalten untereinander ausgerichtet sind.

6. Auffangbehälter (20) nach einem der vorstehenden Ansprüche, wobei die Seitenwände (32a, 32b) zum Fenster (34) hin derart voneinander abweichen, dass die Aussparung (32) eine allgemeine aufgeweitete Form zu diesem Fenster aufweist.

7. Auffangbehälter (20) nach einem der vorstehenden Ansprüche, wobei die Einlässe (30), die sich auf jeder der Seitenflächen (20a) befinden, eine Oberfläche einnehmen, die mehr als 50% der Gesamtoberfläche dieser Seitenfläche (20a) darstellt.

8. Auffangbehälter (20) nach einem der vorstehenden Ansprüche, wobei jede der zwei gegenüberliegenden Seitenflächen (20a) Spalten und Reihen mit mehreren Einlässen (30) umfasst, die jeweils eine Aussparung (32) mit einem progressiv zunehmenden Querschnitt aufweisen, wobei jede Aussparung (32) durch Wände (32a, 32b, 32c, 32d) begrenzt wird, wobei mindestens gewisse der Wände (32a, 32b) Seitenwände (32a, 32b) sind, die eine nichtebene erweiterbare Form ohne Kanten aufweisen, umfassend einen konvexen gekrümmten ersten Abschnitt (32a1, 32b1), gefolgt von einem konkaven gekrümmten zweiten Abschnitt (32a2, 32b2), wobei die Seitenwände (32a, 32b) ein hydrodynamisches Profil vom NACA-Typ aufweisen.

9. Mechanisches Reduktionsgetriebe (6) einer Turbomaschine, insbesondere eines Luftfahrzeugs, umfassend ein Sonnenrad (7), eine Krone (9), die sich um das Sonnenrad erstreckt, Satelliten (8), die mit dem Sonnenrad und der Krone in Eingriff stehen, und Auffangbehälter (20) nach einem der vorstehenden Ansprüche, die zwischen den Satelliten angeordnet sind.

10. Turbomaschine (1), insbesondere eines Luftfahrzeugs, umfassend ein mechanisches Reduktionsgetriebe (6) nach dem vorstehenden Anspruch.

## Claims

1. An oil collector (20) for a mechanical reduction gear (6) of a turbomachine (1), in particular for an aircraft, the collector (20) comprising a body comprising two opposite lateral faces (20a) each configured to extend in part around a planet gear (8) of the reduction gear, the collector further comprising an internal oil circulation cavity (28) connected on the one hand to oil inlets (30) located on said lateral faces (20a), and on the other hand to at least one oil outlet (26), at least one of said faces comprising columns and rows of several inlets (30) each having a recess (32) with a progressively increasing cross-section, **characterized in that** each recess (32) is delimited by walls (32a, 32b, 32c, 32d), and wherein at least some of said walls (32a, 32b) have a NACA-type hydrodynamic profile, one (32c) of said walls comprising an oil passage window (34) inside said internal cavity (28), the walls (32a, 32b, 32c, 32d) of the recess (32) comprise two facing lateral walls (32a, 32b) and an angled wall forming a ramp extending between the lateral walls and configured to convey the oil from the lateral face (20a) to a bottom wall (32c) comprising said window (34), the lateral walls (32a, 32b) each have an evolutionary shape that is non-planar and has no edges comprising a first convexly curved portion (32a1, 32b1) followed by a second concavely curved portion (32a2, 32b2) , the lateral walls (32a, 32b) having the NACA-type hydrodynamic profile.

2. The collector (20) according to claim 1, wherein the number of rows is greater than or equal to three.

3. The collector (20) according to claim 1 or 2, wherein the number of columns is greater than or equal to five, and preferably greater than or equal to eight.

4. The collector (20) according to one of the preceding claims, wherein the inlets (30) of one row are offset in the direction of the column arrangement with respect to the inlets of at least one of the adjacent rows.

5. The collector (20) according to the preceding claim, wherein the inlets (30) define even and odd rows, the even rows are aligned with each other in the direction of the column arrangement, and the inlets (30) of the odd rows are aligned with each other in the direction of the column arrangement.

6. The collector (20) according to one of the preceding claims, wherein the lateral walls (32a, 32b) diverge from each other towards said window (34) such that the recess (32) has a generally flared shape towards that window.

7. The collector (20) according to one of the preceding claims, wherein the inlets (30) located on each of the lateral faces (20a) occupy a surface area representing more than 50% of the total surface area of this lateral face (20a).

8. The collector (20) according to any one of the preceding claims, wherein each of the two opposite lateral faces (20a) comprises the columns and rows of several inlets (30) each having a recess (32) of progressively increasing cross-section, each recess (32) being delimited by walls (32a, 32b, 32c, 32d), at least some of said walls (32a, 32b) are lateral walls (32a, 32b) having an evolutionary shape that is non-planar and has no edges comprising a first convexly curved portion (32a1, 32b1) followed by a second concavely curved portion (32a2, 32b2) , the lateral walls (32a, 32b) having the NACA-type hydrodynamic profile, the lateral walls (32a, 32b) having a NACA-type hydrodynamic profile.

9. A mechanical reduction gear (6) for a turbomachine, in particular for an aircraft, comprising a sun gear (7), a ring gear (9) extending around the sun gear, planet gears (8) meshed with the sun gear and the ring gear, and collectors (20) according to one of the preceding claims arranged between the planet gears.

10. A turbomachine (1), in particular for an aircraft, comprising a mechanical reduction gear (6) according to the preceding claim.
